# EUROPEAN PATENT APPLICATION

(11) **EP 4 700 261 A1**
(43) Date of publication of application: **25.02.2026**
(21) Application number: 24196043.4
(22) Date of filing: 23.08.2024
(51) Int. Cl.: F16L 3/13, F16L 55/035

(54) **CLIP-IN FIXATION DEVICE FOR A CYLINDRICAL ITEM SUCH AS A VEHICLE BRAKE PIPE WITH INCREASED PULL-OUT FORCE**

(71) Applicant: Hellermann Tyton GmbH & Co. KG, 25436 Tornesch (DE)
(72) Inventor: LANGELOH, Amadeus, 25436 Tornesch (DE)
(74) Representative: Hernandez, Yorck

(57) **Abstract**

The disclosure relates to a fixation device (1) for fixing a cylindrical item (6), in particular a pipe or a cable, to an external carrier structure, in particular a vehicle, with a clip-in part (3) configured for attachment of the cylindrical item (6) to the fixation device (1) by insertion of the cylindrical item (6) through an opening (3a) of the clip-in part (3) into a receiving area (3b) of the clip-in part (3) in an insertion direction (I), where the clip-in part (3) is configured to be deformed by the cylindrical item (6) during insertion from a closed state, in which closed state the opening (3a) is of smaller size, to an open state, in which open state the opening (3a) is of larger size, and where the clip-in part (3) is configured to reshape back into the closed state after insertion of the cylindrical item (6); and with a frame part (2) configured for fixing the fixation device (1) to the external carrier structure; wherein a spring element part (4) movably connects the clip-in part (3) and the frame part (2); and, while being connected to the frame part (2) via the spring element part (4), the clip- in part (3) may be moved from a neutral position, where two outer flanks (3e, 3e') of the clip-in part (3) do not touch the frame part (2), to a locking position, where the two outer flanks (3e, 3e') of the clip-in part (3) do touch the frame part (2) in order to provide a tool-free fixation device (1)for fixing a cylindrical item (6) to a carrier structure with high reliability and with vibration-damping.

## Description

### Field of the invention

The disclosure relates to a fixation device for fixing a cylindrical item, in particular a pipe or a cable, to an external carrier structure, in particular a vehicle, comprising a clip-in part configured for attachment of the cylindrical item to the fixation device by insertion of the cylindrical item through an opening of the clip-in part into a receiving area of the clip-in part in an insertion direction, where the clip-in part is configured to be deformed by the cylindrical item during insertion from a closed state, in which closed state the opening is of smaller size, to an open state, in which open state the opening is of larger size, and where the clip-in part is configured to reshape back into the closed state after insertion of the cylindrical item; and comprising a frame part configured for fixing the fixation device to the external carrier structure.

### Background

In most technical applications, whenever vibrations occur, there is a need to decouple at least some items from the vibrations. In particular, rigid pipes such as vehicle brake pipes or rigid cables such as busbars in an electric vehicle are specifically prone to annoying noises, potentially even damages, due to vibrations and need to be decoupled from a vibrating carrier structure such as the vehicle. However, also flexible pipes or cables may need to be vibrationally decoupled from a carrier structure. Both flexible and rigid pipes or cables are referred to as cylindrical item(s) in the following. In any case, the reliability of the fixation of these cylindrical items to the carrier structure is paramount in order to avoid loose pipes or cables. Furthermore, the fixation should be simple and easy to accomplish, preferably without tools.

Accordingly, e.g. conventional rigid brake pipes (e.g. with Ø5mm) are usually mounted on a vehicle as carrier structure using standard plastic brackets as fixation device. These brackets are mounted in the vehicle on welding studs or with fir tree clips or arrow heads. The brake pipes are then plugged into Omega clips or v-shaped clips as clip-in part of the fixation device. Due to the round cross-section and the smooth surface of the pipes, it is challenging to achieve sufficiently high pull-out forces and low assembly forces at the same time. For a standard Omega clip, for instance, clip-in force and pull-out force are nearly equal. Furthermore, in the course of time the mounts tend to bend open easily, especially at higher temperatures.

The technical task, therefore, is to provide a tool-free fixation device for fixing a cylindrical item to a carrier structure with high reliability and with vibration-damping, in particular with the required pull-out force exceeding the required push-in force.

### Overview

This task is solved by the subject-matter of the independent claim. Advantageous embodiments are apparent from the dependent claims, the description and the figures.

One aspect relates to a fixation device for fixing a cylindrical item, in particular a pipe or a cable, to an external carrier structure that is not part of the fixation device, in particular a vehicle. The cylindrical item may be rigid or flexible. The fixation device comprises a clip-in part, a frame part, and a spring element part. Preferably, the spring element part is more flexible than the clip-in part and/or the clip-in part is more flexible than the frame part.

The clip-in part is configured for attachment of the cylindrical item to the fixation device by insertion of the cylindrical item through an opening of the clip-in part into a receiving area of the clip-in part in an insertion direction. The clip-in part is configured to be deformed by the cylindrical item from a closed state to an open state by the cylindrical item during insertion of the cylindrical item into the receiving area. In particular, this deformation may define the flexibility of the clip-in part. Therein, in the closed state the opening is of smaller size, and in the open state the opening is of larger size. The clip-in part is configured to reshape back into the closed state after insertion of the cylindrical item, and thus prevent removal of the cylindrical item by narrowing the opening.

The clip-in part as such (i.e. without the frame part stopping the clip-in part from spreading, as apparent from the below explanations) may be configured for releasing the cylindrical item when the cylindrical item is pulled in a releasing direction out of the receiving area of the clip-in part through the opening of the clip-in part. Therein, the releasing direction is orientated opposite to the insertion direction.

The clip-in part is connected to the frame part movably by the spring element part, i.e. clip-in part and frame part can be moved with respect to one another while being connected by means of the spring element part (without destruction of the fixation device). The frame part is configured for fixing the fixation device to the external carrier structure. Preferably, the clip-in part is connected to the frame part only by the spring element part. The spring element part is configured for providing vibration-damping of the clip-in part, and thus the cylindrical item when inserted ("clipped-in") into the clip-in part, with respect to the frame part. Preferably, the vibration-damping functionality of the spring element part is achieved by its geometrical characteristics rather than its material characteristics, i.e. preferably the spring element part is made of the same material as frame part and/or clip-in part. Thus, the spring element part may be considered to connect the clip-in part with the frame part flexibly, i.e. in a way that allows the repeated (i.e. non-destructive) movement of the clip-in part relative to the frame part.

Thus, the spring element part connects the clip-in part with the frame part that allows the clip-in part to be moved (non-destructively) from at least one (one, several, or many) neutral position to at least one (one, several, or many) locking position while being connected to the frame part. In particular, the deformation of the spring element part during this movement may define the flexibility of the spring element part. In the neutral position the outer flanks of the clip-in part do not touch the frame part. In the locking position the outer flanks of the clip-in part do touch the frame part. The locking position may be closer to an opening of the frame part through which the cylindrical item has to be slid when inserted into the clip-in part than the neutral position. This has the effect that a vibration-damping functionality is implemented in the neutral position, while a locking functionality is activated automatically in the locking position, in particular when the cylindrical item, and thus the clip-in part, is moved in the direction opposite to the insertion direction.

Therein, the frame part preferably comprises two inner flanks converging in a direction opposite to the insertion direction such that the clip-in part touches the frame part, in particular the inner flanks, with two outer flanks of the clip-in part when the clip-in part is moved in the direction opposite to the insertion direction. The direction opposite to the insertion direction may also be referred to as releasing direction. The outer flanks may be opposite flanks, i.e. oppositely orientated flanks. The outer flanks may be orientated away from the clip-in part. The inner flanks may be oriented towards each other and/or the clip-in part. Said two inner flanks converging in the releasing direction correspond to a free space between the inner flanks that narrows (i.e. has less width in a width direction perpendicular to the releasing direction and a main extension direction of the cylindrical item) along the releasing direction. The narrower part of the free space may be referred to as top or top section, and the wider part of the free space may be referred to as bottom or bottom section. In the neutral position of the clip-in part, the clip-in part is located at least essentially at the wider bottom of the free space. This allows, within preset boundaries, the free movement of the clip-in part, i.e. the movement of the clip-in part without touching the frame part. Preferably, the inner flanks of the frame part run along the main extension direction of the cylindrical item. Here and in the rest of this disclosure, an orientation of a plane/flank may be determined by the respective normal vector.

The described shape of the free space (wide at bottom, narrow at top) in combination with the spring element part has the technical effect that when the cylindrical item is clipped-in into the clip-in part, the clip-in part is located in the wide bottom part of the free space (neutral position). The bottom part is wide enough to allow the clip-in part to be spread in the width direction, i.e. deformed, enough to receive the cylindrical item in the receiving area via the then-enlarged opening. A high flexibility of the spring element part does not hurt here, since the clip-in part may be pressed against the frame part delimiting the bottom of the free space during insertion. After insertion of the cylindrical item, the clip-in part reshapes into its (at least almost) original shape, and the cylindrical item is attached to the fixation device with vibration-damping due to the spring element part. When the cylindrical item is pulled along the releasing direction, the clip-in part is moved into the narrow top part of the free space (locking position). The narrow space is narrow enough to prevent the clip-in part from being spread in the width direction, i.e. from being deformed to an extent that sets loose the cylindrical item. In particular, the flexibility of the frame part may be defined by a deformation of the frame part, in particular a spreading apart of the inner flanks and/or a widening of the narrow space of the frame part. Thus, the cylindrical item is automatically locked in the clip-in part in the locking position, while the vibration-damping functionality is maintained in the neutral position. Consequently, a tool-free fixation device for fixing a cylindrical item to an external carrier structure with high reliability and with vibration-damping is provided. Therein, a range of different ratios of push-in to pull-out force may be achieved by adapting the geometry of the inner flanks of the frame part and/or of the outer flanks of the clip-in part. The functional separation of the vibration-damping functionality via the spring element part (which remains unaffected by the frame part) and the auto-locking functionality of the frame part in conjunction with the clip-in part (which is enabled by the movability of the clip-in part due to the spring element part, yet to a large extend unaffected by specific characteristics of the spring element part) allows a very specific adaptation of the fixation device to the application at hand, thus result in an improved fixation device.

In one embodiment, it is provided that the clip-in part is or comprises an Omega clip. An Omega clip, due to its resemblance to the Greek letter Ω, may be understood as a clip featuring a semi-circular shape that wraps around the cylindrical item, with feet at the end of the semi-circular shape (the feet of the Omega) defining the opening of its receiving area. In addition or alternatively, the clip-in part may comprise two leg elements (e.g. the legs of the Omega-Clip) extending from a base element (e.g. the base of the Omega-clip), with the opposite outer flanks of the clip-in part each being part of one respective leg element, and/or the spring element part being connected to the base of the clip-in part. During insertion of the cylindrical item, it is mainly the leg elements that are pushed out of their original orientation, while the base element maintains its original orientation. Inner flanks at free ends of the leg elements (e.g. the feet of the Omega-clip) may define the opening of the clip-in part. Thus, a receiving space with round diameter (e.g. in case of the Omega-clip) or a rectangular or any other diameter may be formed. In particular, v-shaped inner flanks converging along the insertion direction are, similar to barbed hooks, advantageous to increase the pull-out force relative to the push-in force.

In a further embodiment, it is provided that the spring element part comprises two or more spring elements, preferably exactly two spring elements, each spring element connecting the clip-in part and the frame part. The spring elements may be spaced apart from each other and/or be flexible enough to allow the clip-in part to touch the frame part when the cylindrical item is inserted, i.e. pushed into the receiving area of the clip-in part. Thus, a force required for widening the clip-in part may be greater than a force required for bringing the clip-in part into contact with the frame part when the clip-in part is moved along the insertion direction. This increases reliability and reproducibility of the installation conditions, leading to improved reliability. Furthermore, the arrangement of separate spring elements saves space along the insertion direction.

Consequently, in another embodiment, it is provided that the spring element part or the spring element(s) is(are) more flexible, i.e. easier to deform than the clip-in part, in particular with a cross-sectional area of the respective spring elements of the spring element part being smaller than a cross-sectional area of the respective leg elements of the clip-in part. This contributes to a clear functional separation of the vibration-damping functionality and the fixation functionality of the fixation device, thus enabling designs adapted to the specific application at hand.

In another embodiment, it is provided that one or more, preferably all, spring elements of the spring element part are easier to deform along the insertion direction than along one or two other directions perpendicular to the insertion direction. This gives the advantage that a specific stability and thus reliability can be achieved while the vibration-damping functionality is maintained. So, this also contributes to the functional separation of the vibration-damping functionality and the fixation functionality of the fixation device.

In a further embodiment, it is provided that the spring element part holds, in particular in absence of any external force, the clip-in part in the neutral position in the wide(r) bottom of the free space. In this neutral position the opposite outer flanks of the clip-in part do not touch the frame part, in particular also the rest of the clip-in part is spaced apart from the frame part. So a freely movable clip-in part is realized, which contributes to the vibration-damping functionality.

In another embodiment, it is provided that the shape of the inner flanks of the frame part are adapted to the shape of the outer flanks of the clip-in part such that a form-fit connection, in particular a flat contact, of frame part and clip-in part is established when the clip-in part is moved sufficiently in the releasing direction. This contributes to a reliable locking functionality since the form-fit connection is specifically suitable for avoiding a deformation of the clip-in part that might set free the cylindrical item accidentally.

In a further embodiment, it is provided that the inner flanks of the frame part comprise one or more edges, which edges may separate parts of the flanks which converge with a different slope and/or parts of the flank forming an undercut and/or sub-parts of the flanks that do not converge. Note that converging flanks may comprise non-converging sub-parts. This enables additional functionalities of the flanks, e.g. the stopper functionality described below and/ or an improved form-fit connection of the clip-in part with the frame part when the clip-in part is moved in the releasing direction.

In one embodiment, it is provided that the frame part comprises two frame leg elements extending from a frame base element, with the inner flanks of the frame part each being part of one respective frame leg element, and/or the spring element part being connected to the frame base of the frame part. The frame leg elements may have any shape, and may even have further functions/features that do or do not rely to the fixation of the cylindrical item. The relevant point is that the free space mentioned above is delimited by the frame leg elements and the frame base element, regardless of further features of leg elements and/or base element.

The attachment of the spring element part at the frame base is particularly advantageous as the desired locking and vibration-damping functionality can be achieved easily in this case. This also allows to have a direction of the spring deflection of the spring part aligned with (i.e. run at least essentially along) the insertion/releasing direction, which avoids damaging of the spring element part during insertion. Aligning the direction(s) of the spring deflection of the spring part with radial directions extending from a center of the clip-in parts' receiving area is ideal for the vibration-damping functionality. Aligning the direction(s) of the spring deflection of the spring part with the insertion/releasing direction helps avoiding damaging of the spring element part during insertion/removal. Thus, preferably, an angle between the direction(s) of the spring deflection and the insertion/releasing direction is equal to or smaller than 45°.

Therein, it may be provided that the frame leg elements, in particular free ends of the frame leg elements remote from the frame base, define an opening of the frame part through which opening the cylindrical item is to be guided when it is inserted into the clip-in part (preferably prior to the insertion into the clip-in part). Said opening of the frame part may be larger, i.e. have a larger diameter in a cross-section perpendicular to the main extension direction of the cylindrical item than the opening of the clip-in part. Thus, the opening provides an additional guidance for the cylindrical item prior to insertion to the clip-in part. This is a space-saving means to simplify the insertion of the cylindrical item.

Consequently, in addition or alternatively to the attachment of the spring element part at the frame base, the spring element part may be attached at respective end sections of the frame leg elements that are remote from the frame base element (these end sections may be referred to as free ends). The spring element part may be attached to the frame part in proximity of the opening of the frame part. In this case, the clip-in part may be attached to the spring element part at the respective end sections (free ends) of its leg elements that are remote from the clip-in base element.

The frame part may comprise respective stopper elements at the free ends of the frame leg elements. This leads to a particularly well-defined increase of the pull-out force. In addition or alternatively, the frame leg elements and the frame base element may define said free space in which the clip-in part may be moved, to a given extent, in arbitrary directions without touching the frame part. This leads to a particularly well-defined amount of vibration-damping.

In a further embodiment, it is provided that clip-in part, frame part and spring element part are a formed as one piece. For instance, clip-in part, frame part and spring element part may be an injection-mold device made of or with plastic. Preferably the different parts and/or the fixation device are/is manufactured in a single step and/or with a single type of plastic. This gives the advantage that the fixation device can be manufactured with increased speed and simplicity, which enables the easy adaptation of the fixation device to different applications with a reduced number of free parameters.

The features and combinations of features described, including those of the general introduction, as well as the features and combinations of features disclosed in the figure description or in the figures alone, may be used not only alone or in the combination described, but also with other features or without some of the features disclosed, without departing from the scope of the invention. Consequently, embodiments are also part of the invention which are not explicitly shown and described in the figures, but which can be produced by separately combining the individual features disclosed in the figures. Therefore, embodiments and combinations of features which do not comprise all features of an originally formulated independent claim are also to be considered disclosed. Furthermore, embodiments and combinations of features are to be regarded as disclosed which deviate from or go beyond the combinations of features described in the dependencies of the claims.

In the context of the present disclosure, "transverse/along" may be understood as "at least substantially vertical/parallel", i.e. "vertical/parallel" or "substantially vertical/parallel", i.e. vertical/parallel except for a predetermined deviation. The predetermined deviation can, for example, be at most 35°, preferably at most 15°, particularly preferably at most 5° or at most 3°. Accordingly, "oppositely oriented" may be understood in the context of the present disclosure as "at least substantially oppositely oriented" i.e. "at least substantially antiparallel oriented". The limitation "substantially" may also refer to a percentage predetermined maximum permissible deviation, for example at most 15%, preferably at most 5%, particularly preferably at most 3%.

### Detailed description

Example embodiments are described in more detail below with reference to schematic drawings. Therein
- Fig. 1: shows an example embodiment of a fixation device in a side view;
- Fig. 2: shows the example of Fig. 1 in a perspective view;
- Figs. 3A-3D: illustrate the vibration-damping and auto-locking functionality of the fixation device;
- Figs. 4A-4B: show another example embodiment of a fixation device in a side view and in a sectional view; and
- Fig. 5: shows a further example embodiment of a fixation device in a simplified side view.

In the figures, the same or functionally identical features are provided with the same reference signs.

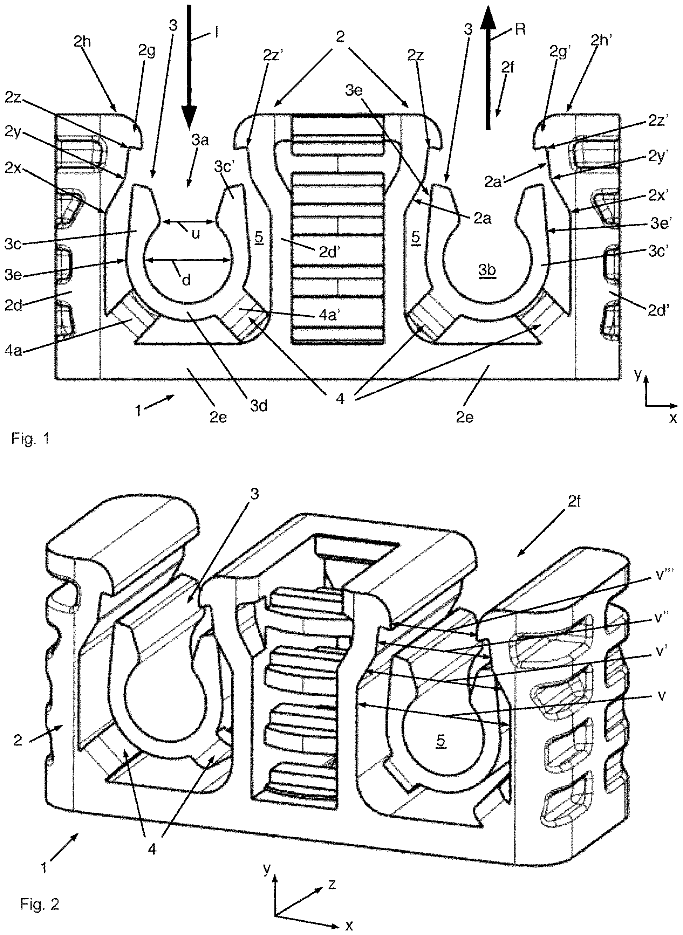

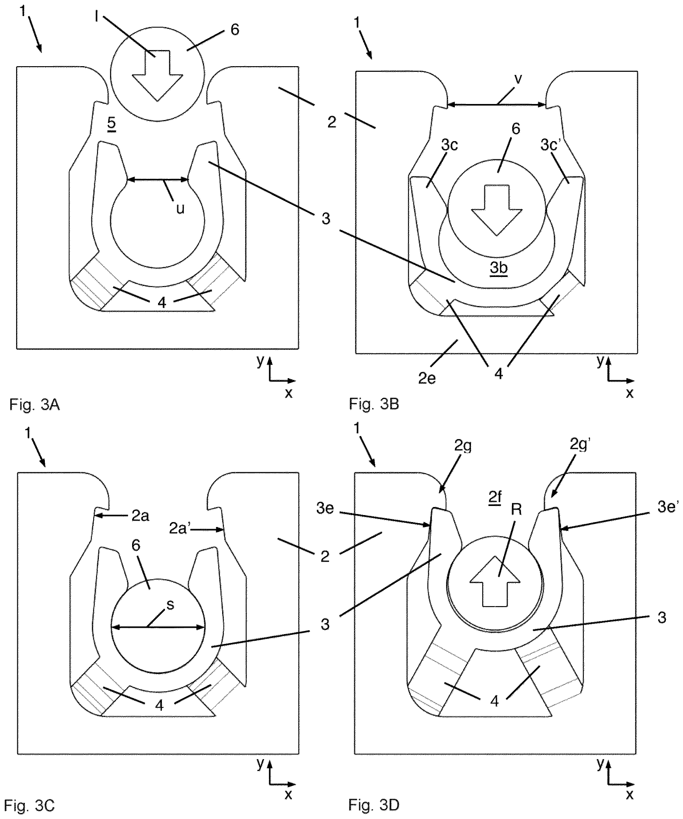

Fig. 1 shows an example embodiment of a fixation device in a side view. The fixation device 1 comprises a frame part 2, a clip-in part 3 and a spring element part 4 for connecting the respective clip-in part 3 to the frame part 2. The present example is a double version with two identical independent clip-in parts 3, which is particularly useful e.g. for a brake pipe featuring a return pipe as cylindrical items 6 (Fig. 3A). However, the fixation device 1 may comprise an arbitrary number of clip-in parts 3. In the drawings, features may only be provided with a reference sign in one of the identical clip parts 3 for the sake of clarity. Also, some features, like e.g. the left frame leg element 2d, may only be provided with a reference sign at one instance of the respective part, while other features, like e.g. left and right edges 2z, 2z' are provided with reference signs at both instances of the respective part.

The frame part 2 is configured for fixing the fixation device 1 to an external carrier structure, e.g. with a bolt (not shown). The clip-in part 3 is configured for attachment of a cylindrical item 6 (Fig. 3A) to the fixation device 1 by insertion of the cylindrical item through an opening 3a of the clip-in part 3 with width u into a receiving area 3b of the clip-in part 3 with diameter d along an insertion direction I (negative y-direction here). Here, width u is smaller than diameter d.

The clip-in part 3 is configured to be deformed by the cylindrical item during insertion from a closed state, in which closed state the opening 3a is of smaller size or width u, to an open state, in which open state the opening 3a is of larger size or width u' (Fig. 3B), and where the clip-in part 3 is configured to reshape back into the closed state after insertion of the cylindrical item. This is depicted in more detail in Figs. 3A-3C.

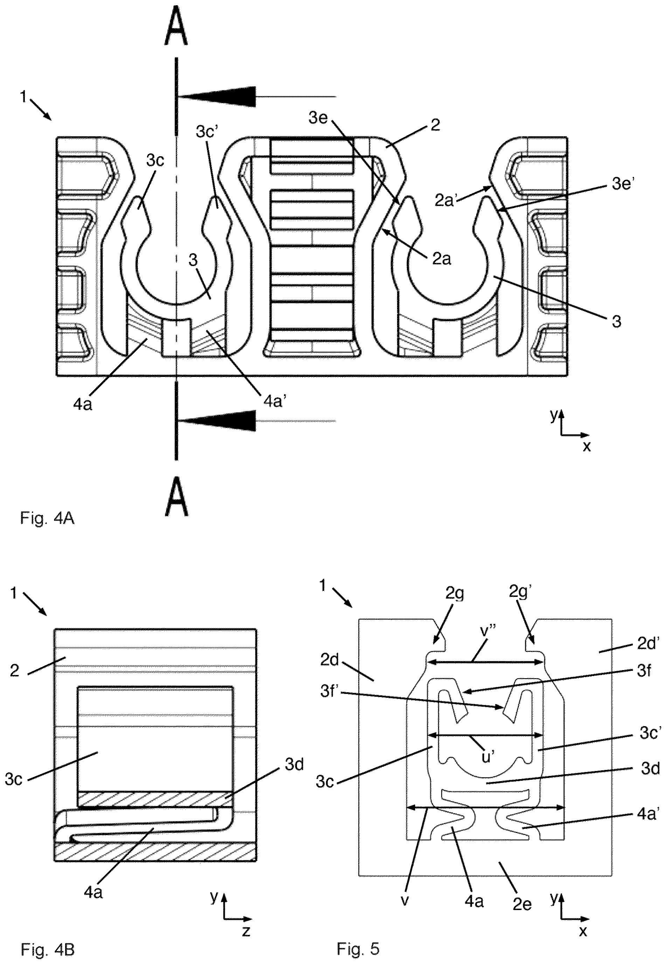

In the present example, the clip-in part 3 comprises two leg elements 3c, 3c' extending from a base element 3d, with opposite outer flanks 3e, 3e'of the clip-in part 3 each being part of one respective leg element 3c, 3c'. Here, the flanks 3e, 3e' are located at free ends of the leg elements 3c, 3c' remote from the base element 3d. In this specific example, the clip-in part is an Omega-clip, but it may be of any other shape, e.g. the shape shown in Figs. 4A, 4B or 5.

In this example, the spring element part 4 comprises several, here exactly two, spring elements 4a, 4a' for the respective clip-in part 3. Preferably, the clip-in part 3 is connected to the frame part 2 only by the spring element part 4, i.e. here the spring elements 4a, 4a'. The spring element part 4 connects to the clip-in part 3 at the base element 3d here. The two spring elements 4a, 4a' are spaced apart in a width direction (x-direction here). This is advantageous since it saves space in the insertion direction I. The spring elements 4a, 4a' are more flexible, i.e. easier to deform, than the leg elements 3c, 3c'. They mainly extend in a direction perpendicular to the drawing plane (z-direction here), which further saves space in the insertion direction I and is shown in more detail in the cross-section of Fig. 4B. Consequently, the spring elements 4a, 4a' are easier to deform parallel to the drawing plane (x- and y directions here) than perpendicular to the drawing plane (z-direction here).

Consequently, in absence of any external force, the spring element part 3 holds the clip-in part 3 in the shown neutral position in a free space 5 defined by the frame part 2. In said neutral position, the opposite outer flanks 3e, 3e' do not touch the frame part 2, and preferably also the rest of the clip-in part 3 is spaced apart from the frame part 2 so as to decouple the clip-in part 3 from vibrations of the frame part 2. In other words, the clip-in part 3 may be moved, to a given extent, in arbitrary directions, i.e. freely, in the free space 5 without touching the frame part 2.

The frame part 2 comprises two inner flanks 2a, 2a' converging in a releasing direction R opposite to the insertion direction I such that the clip-in part 3 touches the frame part 2 with the two opposite outer flanks 3e, 3e' when the clip-in part 3 is moved in the releasing direction R (positive y-direction here). By touching the frame part 2, the clip-in part 3 is delimited in its ability to widen, which is required for releasing, and a locking functionality is activated automatically when the clip-in part 3 is moved along the releasing direction R (see Figs. 3A-3D). The converging flanks 2a, 2a' result in a width of the free space 5 decreasing from bottom section to top section (i.e. in the positive y-direction here), as indicated by the different widths v, v', v", and v‴ (Fig. 2).

In this example, the shape of the inner flanks 2a, 2a' of the frame part 2 is adapted to the shape of the outer flanks 3e, 3e' of the clip-in part 3 such that a form-fit connection of frame part 2 and clip-in part 3 is established when the clip-in part 3 is moved in the releasing direction R, as apparent from Figs. 3A-3D. Consequently, a flat contact surface of outer flanks 3e, 3e' and inner flanks 2a, 2a' may be achieved (see Fig. 3D).

Here, the inner flanks 2a, 2a' of the frame part comprise one or more edges 2x, 2y, 2z, 2x', 2y', 2z' which separate parts of the flanks 2a, 2a' that converge with different slopes. Note that an undercut could be achieved if the sub-parts of the flanks 2a, 2a' between edges 2y, 2z, and 2y', 2z' respectively, would not converge, but diverge (i.e. the width v of the free space would increase in that specific section of the free space 5 between the respective sub-parts of the flanks 2a, 2a').

In the present example, the frame part 2 comprises two frame leg elements 2d, 2d' (per clip-in part 3) extending from a frame base element 2e. The inner flanks 2a, 2a' of the frame part 2 each are part of one respective frame leg element 2d, 2d'. Also, in the present example, the spring element part 4 is connected to the frame base element 2e of the frame part 2. Here, the frame leg elements 2d, 2d' define an opening 2f of the frame part 2 through which opening 2f the cylindrical item is to be guided when it is inserted into the clip-in part 3. Preferably, the opening 2f of the frame part 2 is larger than the opening 3a of the clip-in part 3. So the width v‴ at the top of the free space 5 is larger than the width u of opening 3a. Thus, the frame part 2 need not be deformed during insertion. This allows a particularly stable, rigid frame part 2 that enhances the reliability of the locking, as it is less prone to deformation.

As shown in Fig. 1, the frame part 2 may also comprise respective stopper elements 2g, 2g' at free ends 2h, 2h' of the frame leg elements 2d, 2d'. Said stopper elements 2g, 2g' delimit a movement of the clip-in part 3 in the releasing direction R (independent of the presence of the cylindrical item) as it will at some point suddenly abut the stopper elements 2g, 2g'. Thus the stopper elements 2g, 2g' prevent the spring element part 4 to be damaged when the clip-in part 3 is pulled in the releasing direction R.

Fig. 2 shows the example embodiment of Fig. 1 in a perspective view with the width of the free space 5 decreasing from bottom to top indicated as different widths v, v', v", v‴. As apparent to the skilled person, descriptions relating to relative arrangements of the different parts and/or elements described in this disclosure may relate to a side view/cross-section perpendicular to the main extension direction of the cylindrical item.

Furthermore, the clip-in part 3 may comprise protrusions that protrude over the frame part 2 in the positive and/or negative z-direction, which protrusions allow to keep the clip-in part 3 in the (wider) bottom section of the free space 5 when the cylindrical item 6 is pulled along the releasing direction. In this way, the auto-locking functionality can be overridden when required, even without tools.

Figs. 3A-3D illustrate the vibration-damping and auto-locking functionality of the fixation device.

In Fig. 3A, the cylindrical item 6 is moved along the insertion direction I through opening 2f towards the clip-in part 3. The width v (Fig. 3B) of opening 2f is larger than a diameter s (Fig. 3C) of the cylindrical item 6 here, so the frame part 2 need not be deformed when the cylindrical item 6 is inserted into the fixation device 1. The clip-in part 3 is in the neutral position in Fig. 3A.

In Fig. 3B, the cylindrical item 6 has passed the opening 2f and has entered the free space 5. Since its diameter s is larger than the width u of the opening 3a and the clip-in part 3 is arranged in the free space 5 movable, the clip-in part 3 is pushed along the insertion direction I towards the frame base element 2e, further into the bottom section, when the cylindrical item is pushed further along the insertion direction I. In this process, the leg elements 3c, 3c' are spread apart into the width direction (x-direction here) until the width u of the opening 3a matches the diameter s in order to let the cylindrical item 6 enter the receiving area 3b. The spring element part 4 is compressed, i.e. of reduced length. The clip-in part 3 is in an open state.

In Fig. 3C, the cylindrical item is inserted into the clip-in part 3 it is "clipped-in". Due to the absence of external forces in combination with the spring force of the spring element part 4, the clip-in part has returned to the neutral position of Fig. 3A. Also the spring element part 4 is back to its original length. The clip-in part 3 has reshaped into a closed state, with the width u of opening 3a being smaller than the diameter s of the cylindrical item 6 again. Vibration-damping is achieved as the clip-in part 3, thus the cylindrical item 6, is mechanically coupled to the frame part 2 only via the spring element part 4 here. The clip-in part 3 may be considered to be in a neutral position here.

In Fig. 3D, the cylindrical item 6 is pulled along the releasing direction R. Since the retention force of the spring element part 4 is smaller than the retention force of the clip-in part 3, the clip-in part 3 is moved towards the opening 2f of the frame part 2, the top, while the spring element part 4 is extended, i.e. of increased length. The clip-in part 3 remains in the closed state. At some point, the outer flanks 3e, 3e' touch/contact the frame part 2, here its inner flanks 2a, 2a'. In the present example, the movement of the clip-in part 3 along the releasing direction R is stopped by the stopper elements 2g, 2g' at which the free ends of the clip-in part 3 abut. Due to the contact between outer flanks 3e, 3e' and frame part 2, the leg elements 3c, 3c' cannot be spread (without deforming the frame part 2, which requires significantly more strength than deforming the clip-in part 3 / leg elements 3c, 3c') even if the pulling of the cylindrical item 6 along the releasing direction R continues. Thus the closed state of the clip-in part 3 is maintained and the cylindrical item 6 is automatically locked in the fixation device 1. The forces are transferred from the clip-in part 3 to the frame part 2 and can increase the force required for pulling out the cylindrical item 6 (in spite of the locking, with destroying/deforming the frame part 2) to a force significantly higher than the assembly force. For instance, the pull-out force may exceed the assembly force by a factor of 3 or more. The clip-in part 3 may be considered to be in a locking position here.

Figs. 4A-4B show another example embodiment of a fixation device in a side view and in a sectional view. As apparent from Fig. 4A, the main differences to the example of Figs. 1-3 is the lack of any edges of the converging flanks 2a, 2a' and the closer arrangement of the spring elements 4a, 4a'. Both differences may be implemented independently of one another.

The lack of edges results in the absence of a stopper element, and comes, in the present example, with differently-shaped outer flanks 3e, 3e' of the clip-in part 3. The reduced distance and orientation of the spring elements 4a, 4a' results in different damping characteristics for vibrations.

The cross-section in Fig. 4B shows that the spring elements 4a extend mainly along the main extension direction of the cylindrical item & (z-direction here). This saves space in the insertion/releasing direction (y-direction here) and enables longer spring elements 4a, 4a', which improves vibration-damping.

Fig. 5 shows a further example embodiment of a fixation device in a simplified side view. The main differences of this example with respect to the above examples are the design of the clip-in part 3 and the spring elements 4a, 4a'. The embodiment of Fig. 5 shows that the proposed approach for a self-locking vibration-damped fixation device is compatible with any known clip-in design.

The spring elements 4a, 4a' are, similar to the example of Figs. 4A-4B, arranged close to one another. However, here the spring elements 4a, 4a' have more curves, which leads to adapted damping characteristics.

The clip-in part 3 has, in the present example, straight parallel outer flanks 3e, 3e' which define a width u' of the clip-in part 3 at least in its top part. The frame part 2 has, in the top part remote from the frame base element 2e, a width v", ideally of parallel sub-parts of the inner flanks 2a, 2a', that matches the width u' of the clip-in part 3. Thus, when the clip-in part 3 is pulled along the releasing direction, said sub-parts prevent the spreading of the leg elements 3c, 3c'. Here, the stopper elements 2g, 2g' prevent ripping off the clip-in part 3 form the frame part 2.

In addition, the leg elements 3c, 3c' have, at their respective free ends remote to the base element 3d, v-shaped inner flanks 3f, 3f' that converge along the insertion direction I. Consequently, the parts of the leg elements 3c, 3c' forming these flanks act similar to barbed hooks, which further helps to increase the pull-out force relative to the push-in force.

## Claims

1. Fixation device (1) for fixing a cylindrical item (6), in particular a pipe or a cable, to an external carrier structure, in particular a vehicle, comprising:
- a clip-in part (3) configured for attachment of the cylindrical item (6) to the fixation device (1) by insertion of the cylindrical item (6) through an opening (3a) of the clip-in part (3) into a receiving area (3b) of the clip-in part (3) in an insertion direction (I), where the clip-in part (3) is configured to be deformed by the cylindrical item (6) during insertion from a closed state, in which closed state the opening (3a) is of smaller size, to an open state, in which open state the opening (3a) is of larger size, and where the clip-in part (3) is configured to reshape back into the closed state after insertion of the cylindrical item (6);
- a frame part (2) configured for fixing the fixation device (1) to the external carrier structure;
wherein
- a spring element part (4) movably connects the clip-in part (3) and the frame part (2); and
- while being connected to the frame part (2) via the spring element part (4), the clip-in part (3) may be moved from a neutral position, where two outer flanks (3e, 3e') of the clip-in part (3) do not touch the frame part (2), to a locking position, where the two outer flanks (3e, 3e') of the clip-in part (3) do touch the frame part (2).

2. Fixation device (1) according to claim 1,
wherein
the frame part (2) comprises two inner flanks (2a, 2a') that converge in a direction opposite to the insertion direction (I) such that the clip-in part (3) touches the frame part (2) with the two outer flanks (3e, 3e') of the clip-in part (3) when the clip-in part (3) is moved in the direction opposite to the insertion direction (I).

3. Fixation device (1) according to the preceding claim,
wherein
the shape of the inner flanks (2a, 2a') of the frame part (2) are adapted to the shape of the outer flanks (3e, 3e') of the clip-in part (3) such that a form-fit connection of frame part (2) and clip-in part (3) is established when the clip-in part (3) is moved in the direction opposite to the insertion direction (I).

4. Fixation device (1) according to any one of the two preceding claims,
wherein
the inner flanks (2a, 2a') of the frame part (2) comprise one or more edges (2x, 2y, 2z, 2x', 2y', 2z'), which edges (2x, 2y, 2z, 2x', 2y', 2z') may separate parts of the inner flanks (2a, 2a') which converge with a different slope and/or parts of the inner flanks (2a, 2a') forming an undercut and/or sub-parts of the flanks that do not converge.

5. Fixation device (1) according to any one of the preceding claims,
wherein
the clip-in part (3) is or comprises an Omega clip.

6. Fixation device (1) according to any one of the preceding claims,
wherein
the clip-in part (3) comprises two leg elements (3c, 3c') extending from a base element (3d), with the outer flanks (3e, 3e') of the clip-in part (3) each being part of one respective leg element (3c, 3c'), and/or the spring element part (4) being connected to the base element (3d) of the clip-in part (3).

7. Fixation device (1) according to any one of the preceding claims,
wherein
the spring element part (4) comprises two or more spring elements (4a, 4a'), each spring element (4a, 4a') connecting the clip-in part (3) and the frame part (2).

8. Fixation device (1) according to any one of the preceding claims,
wherein
one or more, preferably all, spring elements (4a, 4a') of the spring element part (4) are easier to deform along the insertion direction (I) than along one or two other directions perpendicular to the insertion direction (I).

9. Fixation device (1) according to any one of the preceding claims,
wherein
the spring element part (4) is more flexible than the clip-in part (3), in particular with a cross-sectional area of the respective spring elements (4a, 4a') of the spring element part (4) being smaller than a cross-sectional area of the respective leg elements (3c, 3c') of the clip-in part (3).

10. Fixation device (1) according to any one of the preceding claims,
wherein
the spring element part (4) holds, in absence of any external force, the clip-in part (3) in the neutral position, in particular with also the rest of the clip-in part (3) being spaced apart from the frame unit.

11. Fixation device (1) according to any one of the preceding claims,
wherein
the frame part (2) comprises two frame leg elements (2d, 2d') extending from a frame base element (2e), preferably with the inner flanks (2a, 2a') of the frame part (2) each being part of one respective frame leg element (2d, 2d'), and/or the spring element part (4) being connected to the frame base element (2e) of the frame part (2).

12. Fixation device (1) according to the preceding claim,
wherein the frame leg elements (2d, 2d') define an opening (2f) of the frame part (2) through which opening (2f) the cylindrical item (6) is to be guided when it is inserted into the clip-in part (3), which opening (2f) of the frame part (2) preferably is larger than the opening (3a) of the clip-in part (3).

13. Fixation device (1) according to any one of the two preceding claims,
wherein
the frame part (2) comprises respective stopper elements (2g, 2g') at free ends (2h, 2h') of the frame leg elements (2d, 2d').

14. Fixation device (1) according to any one of the three preceding claims,
wherein
the frame leg elements (2d, 2d') and the frame base element (2e) define a free space (5) in which the clip-in part (3) may be moved, to a given extent, in arbitrary directions without touching the frame part (2).

15. Fixation device (1) according to any one of the preceding claims,
wherein
clip-in part (3), frame part (2) and spring element part (4) are a formed as one piece.
